# EUROPÄISCHE PATENTSCHRIFT

(11) **EP 1 059 718 B1**
(45) Veröffentlichungstag und Bekanntmachung des Hinweises auf die Patenterteilung: **20.03.2002**
(21) Anmeldenummer: 99121922.1
(22) Anmeldetag: 05.11.1999
(51) Int. Cl.: H02G 3/12

(54) **Leitungsführungskanal für den frontseitigen Einbau von Elektroinstallationsgeräten**
Cable duct for the frontal assembly of apparatus for electrical installation
Goulotte pour câbles pour le montage frontal d'appareils d'installation électrique

(30) Priorität: 08.06.1999 DE 29909946 U
(43) Veröffentlichungstag der Anmeldung: 13.12.2000
(73) Patentinhaber: Tehalit GmbH & Co. KG, 67716 Heltersberg (DE)
(72) Erfinder: Schnurr, Richard, 66957 Vinningen (DE)
(74) Vertreter: Patentanwälte Möll und Bitterich

(56) Entgegenhaltungen:
- EP-A- 0 844 714
- EP-A- 0 862 253
- DE-U- 7 803 034

## Beschreibung

Die Erfindung betrifft Leitungsführungskanäle, die für den frontseitigen Einbau von Elektroinstallationsgeräten geeignet sind, gemäß dem Oberbegriff des Anspruchs 1.

Leitungsführungskanäle mit frontseitig befestigten Installationsgeräten sind bekannt Man vergleiche beispielsweise DE-A 36 43 559 oder FR-A 27 56 431. Um zu verhindern, dass die auf die Deckelverschlussprofile von vorne aufgesteckten Installationsgeräte, beispielsweise Steckdosen, sich bei mechanischer Beanspruchung, beispielsweise beim Herausziehen des Steckers, vom Kanalunterteil lösen können, sich bei Bedarf aber weiterhin leicht demontieren und montieren lassen, sind spezielle Halterungen vorgesehen.

Im Fall der DE-A 36 43 559 handelt es sich um eine Geräteblende, deren Rückseite rechteckig profilierte Stecker aufweist, die beim Einstecken in angepasste Durchbrüche sich gegen die Deckelverschlussprofile des Kanals anlegen und so eine Klemmverbindung bewirken. Rastverzahnungen an den Steckern erschweren das Lösen der Geräteblende.

Im Falle der FR-A 27 56 431 handelt es sich um eine Art Klammer, die neben dem Installationsgerät ebenfalls in die Verschlussprofile des Kanals eingesetzt wird. Die Sicherung gegen das unbeabsichtigte Lösen der Klammer und gegen das seitliche Verschieben von Klammer und Installationsgerät wird durch zwei Schrauben mit selbstschneidendem Gewinde bewirkt, die sich beim Einschrauben mit Hilfe eines Schraubendrehers in die Wände der Verschlussprofile eingraben.

Die bekannte Klammer besteht aus zwei Teilen. Das Unterteil bewirkt die technische Funktion und trägt die beiden Schrauben. Das Klammeroberteil wird mit Hilfe einer Rastverbindung auf dem Unterteil befestigt, es deckt das Unterteil und die beiden Schrauben ab und bewirkt gleichzeitig ein optisch einwandfreies Bild.

Es versteht sich, daß diese Klammer dank der beiden Befestigungsschrauben sehr sicher sitzt. Allerdings ist diese Schraubbefestigung einigermaßen umständlich. Der vorliegenden Erfindung liegt daher die Aufgabe zugrunde, eine Vorrichtung der eingangs genannten Art anzugeben, die sich genauso sicher, jedoch sehr viel schneller montieren und demontieren lässt.

Diese Aufgabe. wird gelöst durch eine Vorrichtung mit den Merkmalen des Anspruchs 1.

Wesentlicher Vorteil der vorliegenden Erfindung ist, dass die Klammer sich mit einer einzigen Bewegung montieren und gegebenenfalls auch demontieren lässt, dass sie absolut sicher sitzt und dass sie insbesondere gegen seitliches Verrutschen gesichert ist. Auch stabilisiert sie die offene Vorderseite des Leitungsführungskanals. Dank der Herstellung aus Stahlblech ist sie besonders stabil.

Die Stabilität wird weiter erhöht, wenn die den Hauptkörper bildende Leiste seitliche Versteifungsrippen erhält

Die Herstellung der Klammer aus Stahlblech ermöglicht jedoch noch weitere vorteilhafte Ausgestaltungen. So kann aus der Leiste durch dreiseitigen Freischnitt ein Flachstecker gebildet werden, so dass die Klammer mit einer Erdungsleitung verbunden werden kann.

Um das Oberteil der erfindungsgemäßen Klammer lösbar mit dem Unterteil verbinden zu können, umfasst das Klammeroberteil vorteilhafterweise zwei federnde Rastzungen mit Rastnasen, die mit einer entsprechenden Öffnung im Klammerunterteil korrespondieren.

Gemäß einer Weiterbildung der Erfindung besitzt das Klammeroberteil eine Kaschierleiste, die einen anstoßenden Kanaldeckel übergreift und so als Schnittkaschierung wirkt.

Korrespondierende Anstoßflächen am Klammeroberteil dienen auf der einen Seite als Anlagefläche für einen Kanaldeckel, auf der anderen Seite als Anlagefläche für das Installationsgerät.

Vorzugsweise besitzt das Klammeroberteil Abstandshalter, die den korrekten Abstand zwischen Klammeroberteil und Klammerunterteil definieren.

Gemäß einer Ausgestaltung der Erfindung ist das Klammeroberteil ein Kunststoff-Spritzteil.

Anhand der Zeichnung soll die Erfindung in Form eines Ausführungsbeispiels näher erläutert werden. Es zeigen
- Fig. 1: einen Leitungsführungskanal mit frontseitig eingebautem Elektroinstallationsgerät und einer frontseitig eingebauten Klammer,
- Fig. 2: einen Ausschnitt aus dem Leitungsführungskanal der Fig. 1 als Seitenansicht,
- Fig. 3: eine perspektivische Ansicht der Oberseite eines Klammerunterteils und
- Fig. 4: eine perspektivische Ansicht der Unterseite eines Klammeroberteils.

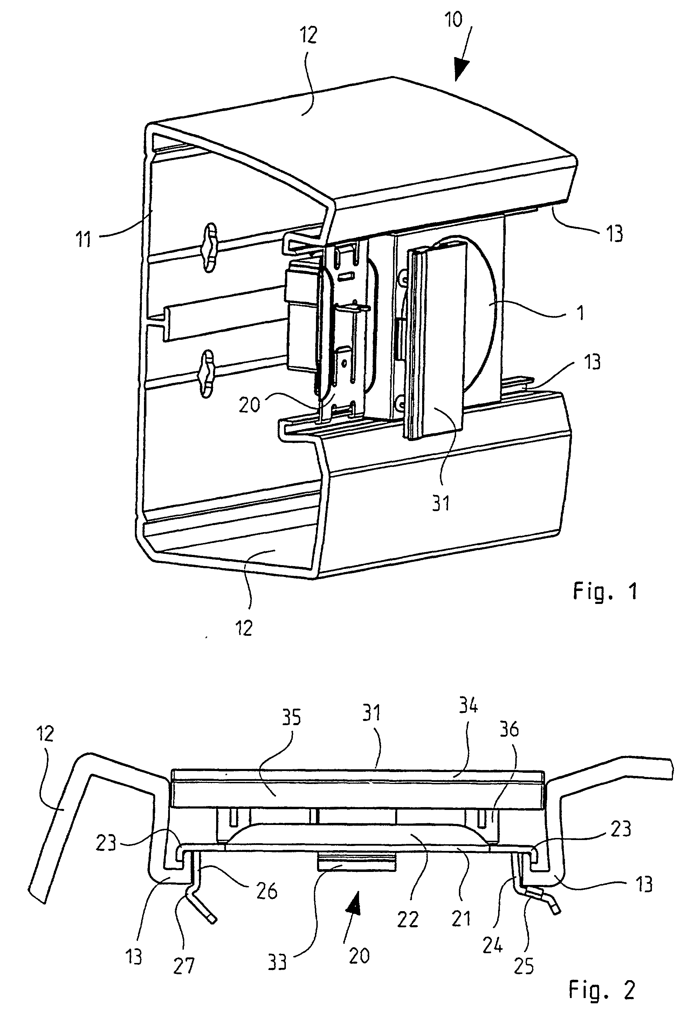

Fig. 1 als perspektivische Draufsicht und Fig. 2 als ausschnittsweise Seitenansicht zeigen einen Leitungsführungskanal 10 mit Rückwand 11, zwei Seitenwänden 12 und zwei parallelen, die offene Vorderseite begrenzenden Verschlussprofilen 13. Ein Elektroinstallationsgerät 1, beispielsweise eine Steckdose, sitzt frontseitig im Leitungsführungskanal 10. Sie ist dazu mit Halteorganen ausgerüstet, die mit den Verschlussprofilen 13 kooperieren.

Neben der Steckdose 1 erkennt man eine den Kanal 10 stabilisierende und insbesondere die Steckdose 1 gegen seitliches Verschieben und gegen versehentliches Herausreißen sichernde Klammer 20.

Die Klammer 20 besteht aus einem Klammerunterteil 21 aus Stahlblech in Form einer flachen Leiste. Diese besitzt an beiden Enden hakenförmige Halteorgane 23, die mit den Verschlussprofilen 13 kooperieren.

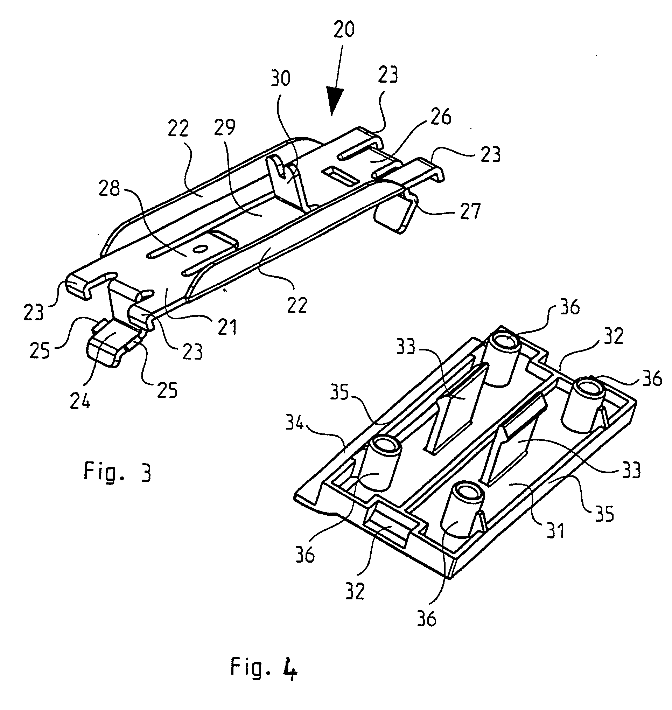

Für den sicheren Sitz des Klammerunterteils 21 sind zwei Zungen 24, 26 verantwortlich. Die erste Zunge 24 ist L-förmig gebogen und sitzt am einen Ende des Klammerunterteils 21. Sie ist mit wenigstens einer Schneidkante 25 ausgerüstet, die sich bei der Montage in die Wand des Verschlussprofils 13 eingräbt. Die zweite Zunge 26 ist federnd. Sie trägt eine Nase 27, die im Montagezustand das Verschlussprofil 13 federnd hintergreift. Nähere Einzelheiten ergeben sich aus Fig. 3.

Auf das Klammerunterteil 21 aufgerastet erkennt man ein Klammeroberteil 31. Abstandhalter 36 definieren den exakten Abstand zwischen Klammerunterteil 21 und Klammeroberteil 31.

Federnde Zungen 33 mit Rastnasen bewirken die lösbare Verbindung von Klammerober- und unterteil 21, 31. Nähere Einzelheiten ergeben sich aus Fig. 3.

Fig. 3 zeigt eine perspektivische Ansicht der Oberseite des Klammerunterteils 21.

Das Klammerunterteil 21 ist eine flache Leiste, die an beiden Seiten Versteifungsleisten 22 besitzt. Diese Versteifungsleisten 22 dienen gleichzeitig als Anschlagflächen einerseits gegen das Installationsgeräte 1, andererseits gegen einen Kanaldeckel. Im Klammerunterteil 21 ist durch dreiseitigen Freischnitt ein Flachstecker 28 gebildet, auf den bei Bedarf eine Erdverbindungsleitung aufgesteckt wird.

Des weiteren besitzt das Klammerunterteil 21 eine zentrale Öffnung 29, mit der die Rastzungen 33 des Klammeroberteils 31 korrespondieren.

Schließlich erkennt man an der Oberseite des Klammerunterteils 21 noch einen Abstandhalter 30, mit dessen Hilfe ein Kanaldeckel im richtigen Abstand zum Klammerunterteil 21 gehalten werden kann, falls aus ästhetischen Gründen einmal ein Klammeroberteil 31 nicht verwendet werden soll.

Die Darstellung des Klammeroberteils 31 in Fig. 4 lässt zunächst vier Abstandhalter 36 und zwei federnde Rastzungen 33 erkennen. Des weiteren erkennt man an der einen Längsseite eine Kaschierleiste 34, die im Montagezustand einen anstoßenden Kanaldeckel übergreift und als Schnittkaschierung wirkt.

An den beiden Schmalseiten des Klammeroberteils 31 erkennt man noch Nuten 32, die im Montagezustand das Abnehmen des Klammeroberteils 31 vom Klammerunterteil 21 ermöglichen.

Anstoßflächen 35 an beiden Seiten des Klammeroberteils 31 dienen als Anlageflächen für einen Kanaldeckel auf der einen Seite und für das Installationsgerät 1 auf der anderen Seite.

## Patentansprüche

1. Leitungsführungskanal (10), geeignet für den frontseitigen Einbau von Elektroinstallationsgeräten (1) und diese gegen Verrutschen und/oder Herausreißen fixierenden, aus einem Klammerunterteil (21) und einem Klammeroberteil (31) bestehenden zweiteiligen Klammem (20), im wesentlichen umfassend
- eine Rückwand (11),
- zwei Seitenwände (12),
- zwei parallele, längslaufende, etwa U-förmige Verschlussprofile (13)
- und eine offene Vorderseite zwischen den Verschlussprofilen (13),
- die Elektroinstallationsgeräte (1) und die Klammem (20) besitzen Halteorgane (23), die mit den Verschlussprofilen (13) kooperieren,
**gekennzeichnet durch** die Merkmale:
- das Klammerunterteil (21) besteht aus profiliertem Stahlblech und umfasst im wesentlichen
-- am einen Klammerende eine erste Zunge (24), die das Verschlussprofil (13) untergreift und die mit wenigstens einer Schneidkante (25) ausgerüstet ist, die sich in das Verschlussprofil (13) eingräbt,
-- am anderen Klammerende eine zweite Zunge (26), die mit einer Nase (27) versehen ist, die das Verschlussprofil (13) federnd hintergreift.

2. Leitungsführungskanal nach Anspruch 1, **gekennzeichnet durch** das Merkmal:
- das Klammerunterteil (21) umfasst seitliche Versteifungs- und Anstoßleisten (22).

3. Leitungsführungskanal nach Anspruch 1 oder 2, **gekennzeichnet durch** das Merkmal:
- am Klammerunterteil (21) ist **durch** dreiseitigen Freischnitt ein Flachstecker (28) gebildet.

4. Leitungsführungskanal nach einem der Ansprüche 1 bis 3, **gekennzeichnet durch** das Merkmal:
- das Klammerunterteil (21) besitzt eine zentrale Öffnung (29).

5. Leitungsführungskanal nach einem der Ansprüche 1 bis 4, **gekennzeichnet durch** die Merkmale:
- das Klammeroberteil (31) umfasst im wesentlichen federnde Rastzungen (33) mit Rastnasen zwecks lösbarer Befestigung am Klammerunterteil (21),
- die Rastzungen (33) korrespondieren mit der zentralen Öffnung (29) im Klammerunterteil (20).

6. Leitungsführungskanal nach Anspruch 5, **gekennzeichnet durch** das Merkmal:
- das Klammeroberteil (31) besitzt eine Kaschierleiste (34), die einen anstoßenden Kanaldeckel übergreift.

7. Leitungsführungskanal nach Anspruch 5 oder 6, **gekennzeichnet durch** das Merkmal:
- das Klammeroberteil (31) besitzt Anstoßflächen (35) für einen anstoßenden Kanaldeckel bzw. das Installationsgerät (1).

8. Leitungsführungskanal nach einem der Ansprüche 5 bis 7, **gekennzeichnet durch** das Merkmal:
- das Klammeroberteil (31) besitzt Abstandhalter (36).

9. Leitungsführungskanal nach einem der Ansprüche 5 bis 8, **gekennzeichnet durch** das Merkmal:
- das Klammeroberteil (31) ist ein Kunststoff-Spritzteil.

## Claims

1. Wiring trunking (10), adapted for the front mounting of electrical installation appliances (1) and two-part clamps (20) which secure the latter against slipping and/or wrenching and consist of a clamp lower part (21) and a clamp upper part (31), essentially comprising
- a rear wall (11),
- two side walls (12),
- two parallel, approximately U-shaped closure profiles (13) extending longitudinally,
- and an open front side between the closure profiles (13),
- the electrical installation appliances (1) and the clamps (20) have retaining members (23) which cooperate with the closure profiles (13),
**characterised by** the features:
- the clamp lower part (21) consists of profiled steel sheet and essentially comprises
-- at one clamp end a first tongue (24) which engages under the closure profile (13) and is provided with at least one cutting edge (25) which digs into the closure profile (13),
-- at the other clamp end a second tongue (26) which is provided with a lug (27) which engages resiliently behind the closure profile (13).

2. Wiring trunking according to Claim 1, **characterised by** the feature:
- the clamp lower part (21) comprises lateral stiffening and abutment strips (22).

3. Wiring trunking according to Claim 1 or 2, **characterised by** the feature:
- a spade terminal (28) is formed at the clamp lower part (21) by blanking on three sides.

4. Wiring trunking according to any one of Claims 1 to 3, **characterised by** the feature:
- the clamp lower part (21) has a central opening (29).

5. Wiring trunking according to any one of Claims 1 to 4, **characterised by** the features:
- the clamp upper part (31) comprises essentially resilient locking tongues (33) with locking lugs for the purpose of fastening it in a releasable manner to the clamp lower part (21),
- the locking tongues (33) correspond to the central opening (29) in the clamp lower part (20).

6. Wiring trunking according to Claim 5, **characterised by** the feature:
- the clamp upper part (31) has a covering strip (34) which engages over an abutting trunking cover.

7. Wiring trunking according to Claim 5 or 6, **characterised by** the feature:
- the clamp upper part (31) has abutment faces (35) for an abutting trunking cover or the installation appliance (1).

8. Wiring trunking according to any one of Claims 5 to 7, **characterised by** the feature:
- the clamp upper part (31) has spacers (36).

9. wiring trunking according to any one of Claims 5 to 8, **characterised by** the feature:
- the clamp upper part (31) is a plastics injectionmoulded part.

## Revendications

1. Goulotte pour câble (10), appropriée pour le montage frontal d'appareils d'installation électrique (1)sans glissement et/ou arrachement, et comprenant des brides doubles constituées d'une partie inférieure de bride (21) et d'une partie supérieure de bride (31), cette goulotte comprenant essentiellement
- un panneau arrière (11),
- deux panneaux latéraux (12),
- deux profilés de fermeture (13) parallèles, longitudinaux et à peu près en forme de U
- et une face avant ouverte entre les profilés de fermeture (13),
- les appareils d'installation électrique (1) et les brides (20) présentant des organes de maintien (23), qui coopèrent avec les profils de fermeture (13),
**caractérisée par** les caractéristiques suivantes :
- la partie inférieure de bride (21) consiste en une tôle d'acier profilée et comprend pour l'essentiel
-- à une extrémité de bride une première lame (24) qui saisit par dessous le profilé de fermeture (13) et est équipée d'au moins une arête acérée (25) qui s'enfonce dans le profilé de fermeture (13),
-- à l'autre extrémité de bride une deuxième lame (26) qui est pourvue d'un ergot (27) qui s'accroche par l'arrière de façon élastique sur le profilé de fermeture (13).

2. Goulotte pour câble selon la revendication 1, **caractérisée par** la caractéristique suivante :
- la partie inférieure de bride (21) comprend des baguettes latérales de renfort et de butée (22).

3. Goulotte pour câble selon la revendication 1 ou 2, **caractérisée par** la caractéristique suivante :
- sur la partie inférieure de la bride (21), une fiche plate (28) est formée par une découpe libre sur trois côtés.

4. Goulotte pour câble selon l'une quelconque des revendications 1 à 3, **caractérisée par** la caractéristique suivante :
- la partie inférieure de bride (21) présente une ouverture (29) centrale.

5. Goulotte pour câble selon l'une quelconque des revendications 1 à 4, **caractérisée par** les caractéristiques suivantes :
- la partie supérieure de bride (31) comprend des lames de verrouillage (33) essentiellement élastiques, avec des ergots de verrouillage pour la fixation amovible sur la partie inférieure de bride (21),
- les lames de verrouillage (33) correspondant à l'ouverture (21) centrale dans la partie inférieure de bride (20).

6. Goulotte pour câble selon la revendication 5, **caractérisée par** la caractéristique suivante :
- la partie supérieure de bride (31) présente une baguette de doublage (34), qui recouvre un couvercle de goulotte de butée.

7. Goulotte pour câble selon la revendication 5 ou 6, **caractérisée par** la caractéristique suivante :
- la partie supérieure de bride (31) présente des surfaces de butée (35) pour un couvercle de goulotte de butée ou l'appareil d'installation (20).

8. Goulotte pour câble selon l'une quelconque des revendications 5 à 7, **caractérisée par** la caractéristique suivante :
- la partie supérieure de bride (31) présente des entretoises (36).

9. Goulotte pour câble selon l'une quelconque des revendications 5 à 8, **caractérisée par** la caractéristique suivante :
- la partie supérieure de bride (31) est une pièce injectée en plastique.
